(19) Europäisches Patentamt
European Patent Office
Office européen des brevets

(11) **EP 4 650 745 A1**

(12) **EUROPEAN PATENT APPLICATION**
published in accordance with Art. 153(4) EPC

(43) Date of publication:
**19.11.2025 Bulletin 2025/47**

(21) Application number: **23924051.8**

(22) Date of filing: **22.02.2023**

(51) International Patent Classification (IPC):
**G01M 99/00** (2011.01)

(52) Cooperative Patent Classification (CPC):
**G01M 99/00**

(86) International application number:
**PCT/JP2023/006521**

(87) International publication number:
**WO 2024/176399 (29.08.2024 Gazette 2024/35)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Mitsubishi Electric Corporation**
**Tokyo 100-8310 (JP)**

(72) Inventors:
• **NISHIKAWA, Keishi**
**Tokyo 100-8310 (JP)**
• **FUKUI, Kotaro**
**Tokyo 100-8310 (JP)**
• **KOBAYASHI, Shoichi**
**Tokyo 100-8310 (JP)**
• **SEKI, Tetsuroh**
**Tokyo 100-0006 (JP)**
• **CHOTOKU, Norihiro**
**Tokyo 100-0006 (JP)**

(74) Representative: **Pfenning, Meinig & Partner mbB**
**Patent- und Rechtsanwälte**
**Theresienhöhe 11a**
**80339 München (DE)**

(54) **INSPECTION DEVICE, INSPECTION METHOD, INSPECTION PROGRAM, LEARNING DEVICE, LEARNING METHOD, AND LEARNING PROGRAM**

(57)      An inspection device (20) includes a force acquisition unit (21) that acquires a first input (D1b) indicating force for holding a target object (30b), an acceleration acquisition unit (22) that acquires a second input (D2b) indicating acceleration, and a judgment unit (23) that judges condition of the target object (30b) from the first input (D1b) and the second input (D2b) by using a learned model for judging the condition of the target object (30b) generated from the first input (D1b) and the second input (D2b) by using user information (U). A learning device (10) includes a data acquisition unit (13) that acquires learning data including first data (D1a) indicating force for holding a target object (30a), second data (D2a) indicating acceleration, and third data (D3a) indicating the condition of the target object (30a) corresponding to a combination of the first data (D1a) and the second data (D2a) and a model generation unit (14) that generates a learned model for judging the condition of the target object.

Fig. 1

**Description**

TECHNICAL FIELD

The present disclosure relates to an inspection device, an inspection method and an inspection program for inspecting condition of a target object, and to a learning device, a learning method and a learning program for generating a learned model to be used for the inspection of the condition of the target object.

BACKGROUND ART

Conventionally, in inspection work of inspecting a mechanical facility, there has been used an inspection method in which a worker judges the condition of a target object (e.g., whether fixation condition is good or not) by vibrating the target object (e.g., instrument) by hand. In such an inspection method, the worker intuitively judges whether the condition of the target object is normal or not through the worker's own body action. Therefore, variation in the judgment result due to the worker's subjectivity is likely to occur.
Further, there has been proposed a device that objectively evaluates a tremor (i.e., shaking) of a finger of a human hand by use of an acceleration sensor (see Patent Reference 1, for example). However, this device is a device that evaluates the presence/absence of a disease by detecting the tremor of a finger, and is not suitable for the judgment on the condition of a target object.

PRIOR ART REFERENCE

PATENT REFERENCE

Patent Reference 1: Japanese Patent Application Publication No. 2008-245917

SUMMARY OF THE INVENTION

PROBLEM TO BE SOLVED BY THE INVENTION

As described above, the conventional method and device have a problem in that it is difficult to judge the condition of the target object with high accuracy.
An object of the present disclosure is to provide an inspection device, an inspection method and an inspection program that make it possible to judge the condition of the target object with high accuracy and a learning device, a learning method and a learning program for generating a learned model that judges the condition of the target object with high accuracy.

MEANS FOR SOLVING THE PROBLEM

An inspection device in the present disclosure is a device that inspects condition of a target object. The inspection device includes a force acquisition unit that acquires a first input indicating force for holding the target object detected by a force sensor attached to a finger of a hand of a user, an acceleration acquisition unit that acquires a second input indicating acceleration detected by an acceleration sensor attached to the hand, and a judgment unit that judges the condition of the target object from the first input and the second input acquired in a period of a vibrating action of vibrating the target object performed by the user, by using a learned model for judging the condition of the target object, the learned model being generated by using user information regarding the user from the first input and the second input acquired in the period.
A learning device in the present disclosure is a device that generates a learned model for judging condition of a target object. The learning device includes a data acquisition unit that acquires learning data including first data indicating force for holding the target object detected by a force sensor attached to a finger of a hand of a user, second data indicating acceleration detected by an acceleration sensor attached to the hand, third data indicating the condition of the target object corresponding to a combination of the first data and the second data in a period of a vibrating action of vibrating the target object performed by the user, and user information regarding the user and a model generation unit that generates the learned model for judging the condition of the target object by using the learning data.

EFFECT OF THE INVENTION

By using the device, the method or the program in the present disclosure, the condition of the target object can be judged with high accuracy.

BRIEF DESCRIPTION OF THE DRAWINGS

Fig. 1 is a functional block diagram schematically showing the configuration of a learning device according to a first embodiment.

Fig. 2 is a diagram schematically showing an example of the hardware configuration of the learning device in Fig. 1.

Fig. 3 is a flowchart showing the operation of the learning device in Fig. 1.

Fig. 4 is a functional block diagram schematically showing the configuration of a learning device according to a modification of the first embodiment.

Figs. 5A to 5C are diagrams showing relationships between a feature value extracted from a force detection value feature value and an acceleration detection value feature value and fixation condition.

Fig. 6 is a flowchart showing the operation of the learning device in Fig. 4.

Fig. 7 is a functional block diagram schematically showing the configuration of an inspection device according to a second embodiment.

Fig. 8 is a diagram schematically showing an example of the hardware configuration of the inspection device in Fig. 7.

Fig. 9 is a flowchart showing the operation of the inspection device in Fig. 7.

Fig. 10 is a functional block diagram schematically showing the configuration of an inspection device according to a modification of the second embodiment.

Fig. 11 is a flowchart showing the operation of the inspection device in Fig. 10.

MODE FOR CARRYING OUT THE INVENTION

An inspection device, an inspection method, an inspection program, a learning device, a learning method and a learning program according to embodiments will be described below with reference to the drawings. The following embodiments are just examples and it is possible to appropriately combine embodiments and appropriately modify each embodiment.

(1) First Embodiment

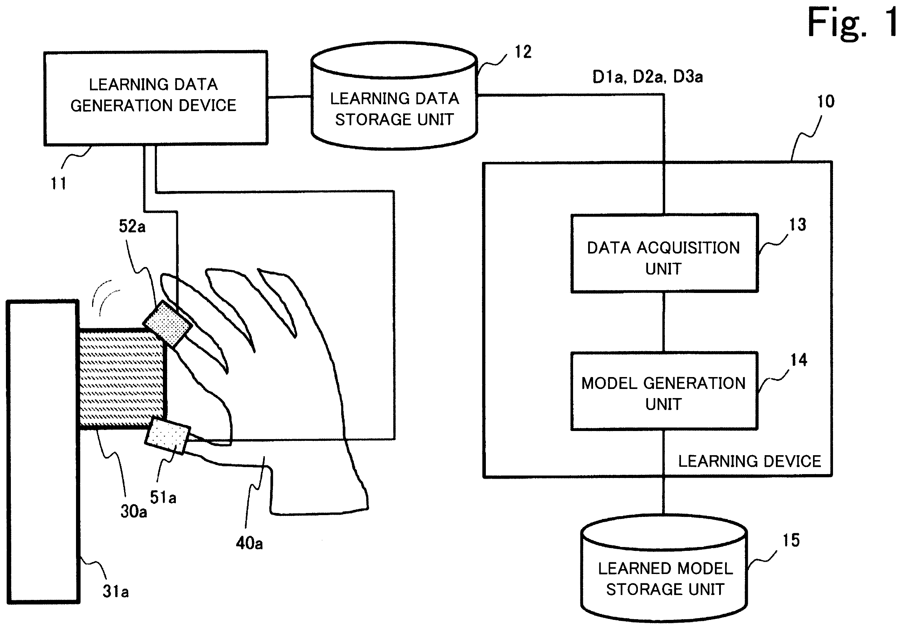

Fig. 1 is a functional block diagram schematically showing the configuration of a learning device 10 according to a first embodiment. The learning device 10 is a device that generates a learned model for judging the condition of an instrument 30a as a target object of inspection. The learning device 10 is a device capable of executing a learning method according to the first embodiment. The learning device 10 is, for example, a computer capable of executing a learning program according to the first embodiment.

As shown in Fig. 1, the learning device 10 includes a data acquisition unit 13 and a model generation unit 14. The data acquisition unit 13 acquires learning data stored in a learning data storage unit 12 as a storage device. The learning data includes force detection values D1a as first data (sensor values) indicating force for holding the instrument 30a detected by a force sensor 51a attached to a finger of a hand 40a of a user as a worker, acceleration detection values D2a as second data (sensor values) indicating acceleration detected by an acceleration sensor 52a attached to the same hand 40a, and condition information D3a (correct answer) as third data indicating the condition of the instrument 30a corresponding to a combination of the force detection values D1a and the acceleration detection values D2a in a period of a vibrating action of vibrating the instrument 30a performed by the same hand 40a. The learning data may include user information U regarding the user. The user information U will be described later. Each of the force sensor 51a and the acceleration sensor 52a may be configured to be stuck to a fingertip or a hand, or to be fixed to a fingertip or a hand by using a member to be wound around a finger. Further, the hand 40a may be provided with a plurality of acceleration sensors, a plurality of force sensors, or a plurality of acceleration sensors and a plurality of force sensors. Furthermore, the plurality of acceleration sensors or the plurality of force sensors are desired to satisfy the number of sensors, sizes, and attachment positions that do not impair attachability to the hand 40a or workability with the hand 40a.

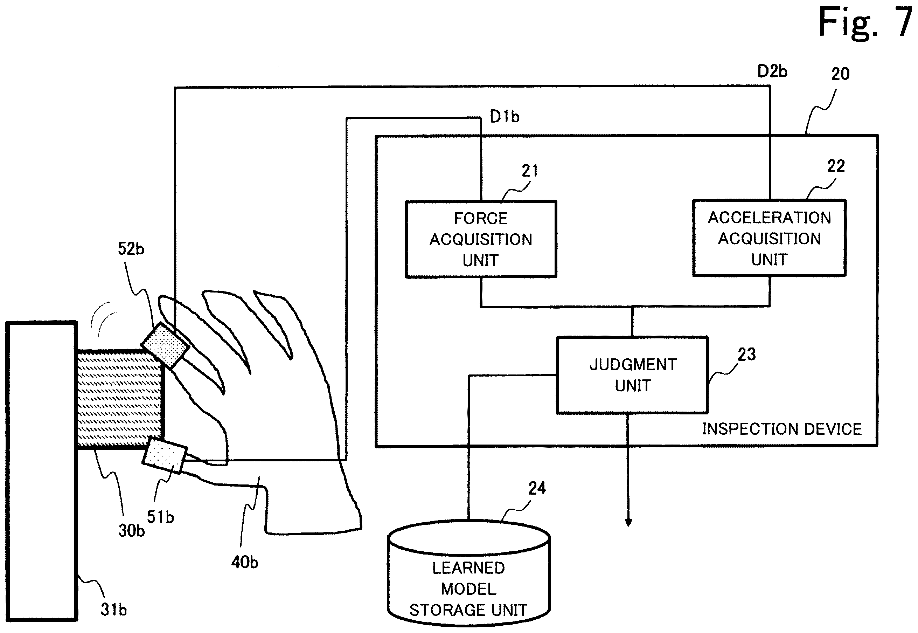

The model generation unit 14 generates the learned model, to be used for judging the condition of the instrument 30a as the target object of the inspection, by using the learning data acquired by the data acquisition unit 13. The generated learned model is stored in a learned model storage unit 15 as a storage device. It is permissible even if the learning data storage unit 12 and the learned model storage unit 15 are implemented by the same storage device. The generated learned model is used for judging the condition of an instrument 30b as a target object of the inspection by an inspection device 20 as an inference device described later in a second embodiment (Fig. 7). The judgment on the condition of the instrument 30b is, for example, judgment on whether the fixation condition of the instrument 30b to a support member 31b is good or not. While the instrument 30a in Fig. 1 and the instrument 30b in Fig. 7 which will be explained later can be the same instrument, the instruments 30a and 30b can also be different instruments of the same type (e.g., a type in which conditions of fastening the instruments 30a and 30b to support members 31a and 31b are the same).

The learning data to be inputted to the learning device 10 has been generated by a learning data generation device 11 and previously stored in the learning data storage unit 12. The learning data generation device 11 is a computer, for example. The learning data generation device 11 and the learning device 10 can be the same computer.

The learning data includes the force detection values D1a as the first data indicating the force for holding the instrument 30a with a finger (thumb in Fig. 1) of the hand 40a of the user, the acceleration detection values D2a as the second data indicating the acceleration detected by the acceleration sensor 52a attached to a finger (index finger in Fig. 1) of the same hand 40a, and the condition information D3a (e.g., whether the fixation condition is good or not) as the third data indicating the condition (e.g., the fixation condition) of the instrument 30a corresponding to the combination of the force detection values D1a and the acceleration detection values D2a in the period of the vibrating action of vibrating the instrument 30a performed by the same hand 40a (i.e., the action of shaking the instrument with the hand 40a). The condition information D3a is, for example, information indicating whether the fixation condition of the instrument 30a to the support member 31a is good or not. It is desirable to collect the learning data in regard to a plurality of users. In this case, the learning data includes the user information U regarding the users.

The force sensor 51a is arranged, for example, on a finger pad (i.e., on the inner side of a finger) of the hand 40a to be situated between the finger and the instrument 30a. The force sensor 51a may also be attached to a finger of the hand 40a other than the thumb. The force sensor 51a can be a pressure sensor. It is also possible to provide a plurality of force sensors as the force sensor 51a. For example, two force sensors as the force sensors 51a may be provided on two fingers holding the instrument 30a.

The acceleration sensor 52a is attached to the same hand to which the force sensor 51a is attached. The acceleration sensor 52a may also be attached to a finger of the hand 40a other than the index finger. Further, the acceleration sensor 52a may also be attached to a position on the hand 40a other than a finger (e.g., palm or back of the hand). A uniaxial, biaxial or triaxial acceleration sensor can be used as the acceleration sensor 52a. The hand 40a for performing the vibrating action may be provided with a plurality of acceleration sensors as the acceleration sensor 52a.

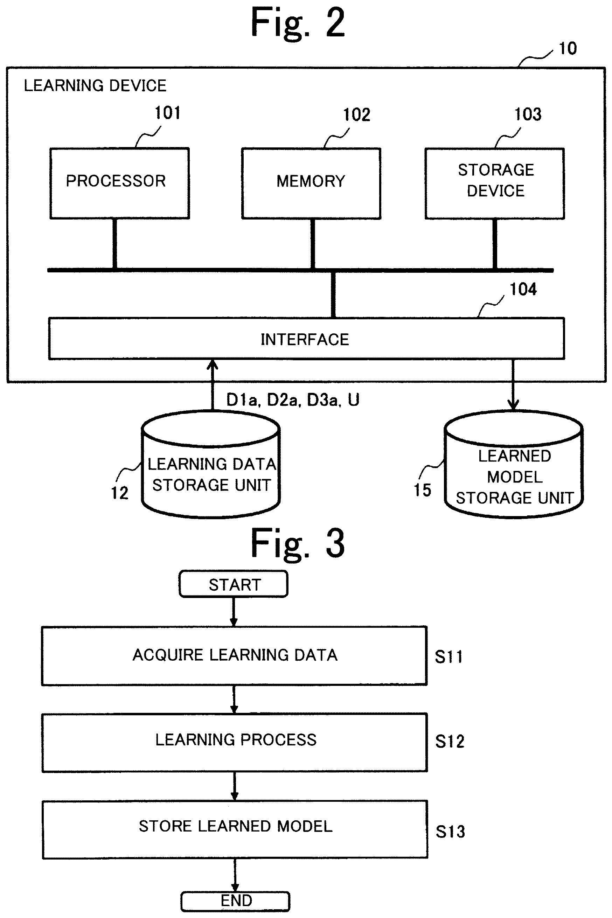

Fig. 2 is a diagram schematically showing an example of the hardware configuration of the learning device 10 in Fig. 1. As shown in Fig. 2, the learning device 10 includes a processor 101 such as a CPU (Central Processing Unit), a memory 102 as a volatile storage device, a nonvolatile storage device 103 such as a hard disk drive (HDD) or a solid state drive (SSD), and an interface 104. The memory 102 is, for example, a semiconductor memory such as a RAM (Random Access Memory).

Functions of the learning device 10 are implemented by a processing circuit, for example. The processing circuit can be either dedicated hardware or the processor 101 executing a program stored in the memory 102. The processor 101 can be any one of a processing device, an arithmetic device, a microprocessor, a microcomputer and a DSP (Digital Signal Processor).

In the case where the processing circuit is dedicated hardware, the processing circuit is, for example, a single circuit, a combined circuit, a programmed processor, a parallelly programmed processor, an ASIC (Application Specific Integrated Circuit), an FPGA (Field-Programmable Gate Array) or a combination of some of these circuits.

In the case where the processing circuit is the processor 101, the learning program to be executed is implemented by software, firmware, or a combination of software and firmware. The learning program is installed in the learning device 10 via a network or from a record medium. The software and the firmware are described as programs and stored in the memory 102. The processor 101 is capable of implementing the functions of the units shown in Fig. 1 by reading out and executing the learning program stored in the memory 102.

Incidentally, it is also possible to implement part of the learning device 10 by dedicated hardware and other part of the learning device 10 by software or firmware. As above, the processing circuit is capable of implementing the above-described functions by hardware, software, firmware or a combination of some of these means.

Fig. 3 is a flowchart showing the operation of the learning device 10 in Fig. 1. As shown in Fig. 3, in a learning phase, in step S11, the data acquisition unit 13 acquires the learning data including the force detection values D1a as the first data, the acceleration detection values D2a as the second data, the condition information D3a (i.e., the correct answer) as the third data indicating the condition of the instrument 30a corresponding to the combination of the force detection values D1a and the acceleration detection values D2a, and the user information U.

In step S12, the model generation unit 14 generates the learned model according to learning data generated based on the acquired learning data.

In step S13, the learned model storage unit 15 stores the learned model generated by the model generation unit 14.

By using the learned model generated by use of the learning device, the learning method and the learning program according to the first embodiment, the worker's subjectivity does not influence the judgment, and thus the condition of the target object can be judged with high accuracy.

(2) Modification of First Embodiment

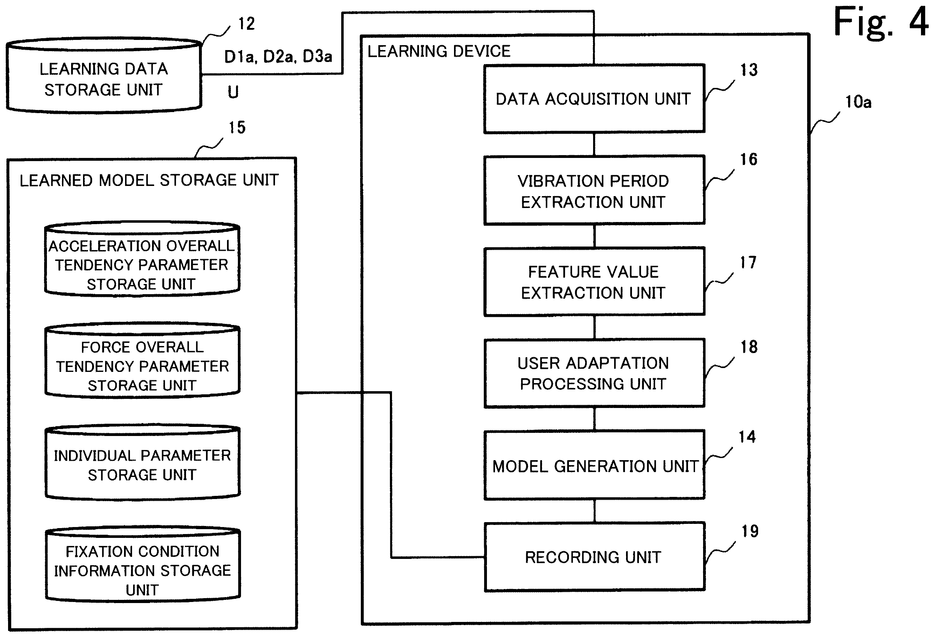

Fig. 4 is a functional block diagram schematically showing the configuration of a learning device 10a according to a modification of the first embodiment. The learning device 10a is a device that generates the learned model for judging the condition of an instrument as the target object of the inspection. The learning device 10a is a device capable of executing a learning method according to the modification of the first embodiment, such as a computer, for example.

Similarly to the learning device 10 in Fig. 1, the learning device 10a includes the data acquisition unit 13 and the model generation unit 14. Further, the learning device 10a includes a vibration period extraction unit 16, a feature value extraction unit 17, a user adaptation processing unit 18 and a recording unit 19.

The vibration period extraction unit 16 extracts a vibration period as the period of the vibrating action based on at least either of the force detection values D1a as the first data (sensor values) and the acceleration detection values D2a as the second data (sensor values). For example, the vibration period extraction unit 16 can determine a period in which the force detection value D1a exceeds a predetermined first set value as the vibration period. Further, the vibration period extraction unit 16 can determine a period in which the acceleration detection value D2a exceeds a predetermined second set value as the vibration period. Furthermore, the vibration period extraction unit 16 may determine a period in which the force detection value D1a exceeds a predetermined first set value and the acceleration detection value D2a exceeds a predetermined second set value as the vibration period. Moreover, the vibration period extraction unit 16 may determine a period designated by a user operation as the vibration period. It is also possible to use another publicly known method for the extraction of the vibration period.

The feature value extraction unit 17 extracts a force detection value feature value as a first feature value from the force detection values D1a as the first data and extracts a force detection value feature value as a second feature value from the acceleration detection values D2a as the second data. The force detection value feature value is, for example, a variance value, a peak-to-peak value, a mean value or the like. The acceleration detection value feature value is, for example, a variance value, a peak-to-peak value, a mean value or the like, and it is also possible to use a value regarding triaxial acceleration.

The user adaptation processing unit 18 assigns weights to the feature values based on the force detection value feature value as the first feature value, the force detection value feature value as the second feature value, and the user information U. A weighted feature value x is calculated according to the following expression (1), for example:

$$x = \beta_a \cdot Acc + \beta_p \cdot Prs + \beta_{sbj} \qquad (1)$$

In the expression (1), $\beta_a$ is a parameter representing an acceleration overall tendency, Acc represents the acceleration detection value feature value, $\beta_p$ is a parameter representing a force overall tendency, Prs represents the force detection value feature value, and $\beta_{sbj}$ is a parameter representing an individual difference that is set for each user as a worker performing the inspection.

The model generation unit 14 generates a plurality of learned models corresponding to the user information U including at least either of identification information regarding the user and an attribute of the user and stores the learned models in the learned model storage unit 15 as a storage unit. The attribute of the user includes the user's years of experience regarding the inspection work (i.e., information indicating the number of times the user has experienced the work) or the like. Further, the attribute of the user includes physical information regarding the user. The physical information includes, for example, one or more items of information out of body height, body weight, muscle mass, sex, age, etc. of the user. In this example, grouping is carried out based on the attribute of the user and thereafter a model is constructed in regard to each group. By this method, variations can be reduced in the learning data to be used for constructing the model and in inference target data to be used for inference, and thus the condition of the instrument can be estimated with high accuracy.

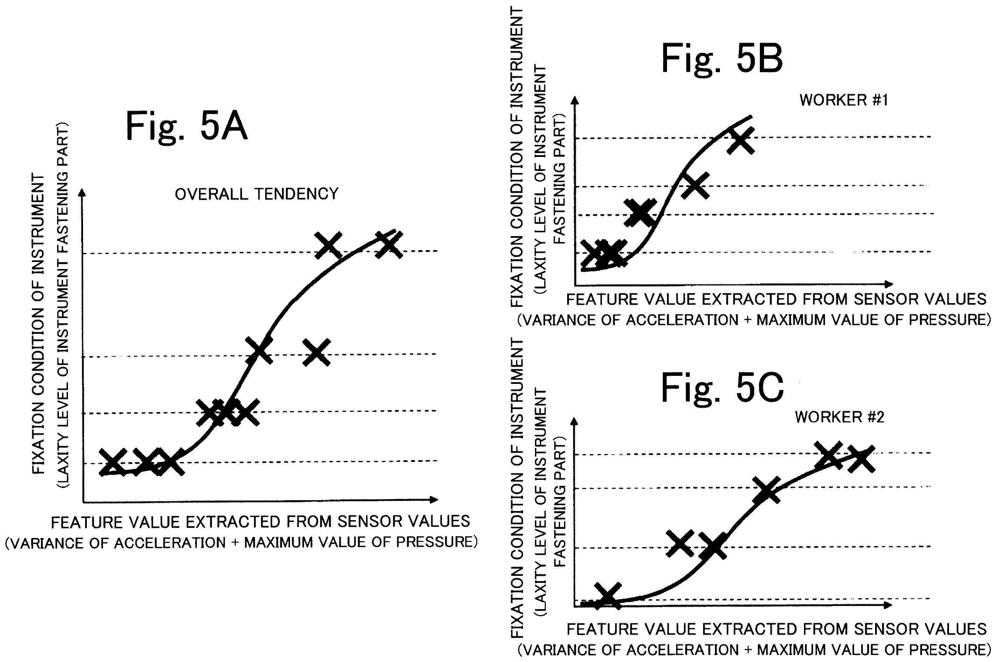

Figs. 5A to 5C are diagrams showing relationships between a feature value obtained from the force detection value feature value and the acceleration detection value feature value and the fixation condition. In Figs. 5A to 5C, an input (horizontal axis) represents a feature value based on the acceleration sensor and the force sensor (e.g., pressure sensor) as vibrating action measurement sensors for measuring the vibrating action by the user, an output (vertical axis) represents an index value indicating the fixation condition of the instrument, and the relationship between these values is expressed by a hierarchical Bayesian model. Fig. 5A shows an overall tendency of a plurality of users, Fig. 5B shows a tendency of one user (worker #1), and Fig. 5C shows a tendency of one user (worker #2). In Figs. 5A to 5C, the horizontal axis represents the feature value obtained from the force detection value feature value and the acceleration detection value feature value, such as the sum of the variance of the detected acceleration and the maximum value of the detected force (pressure), for example. In Figs. 5A to 5C, the vertical axis represents a laxity level of an instrument fastening part.

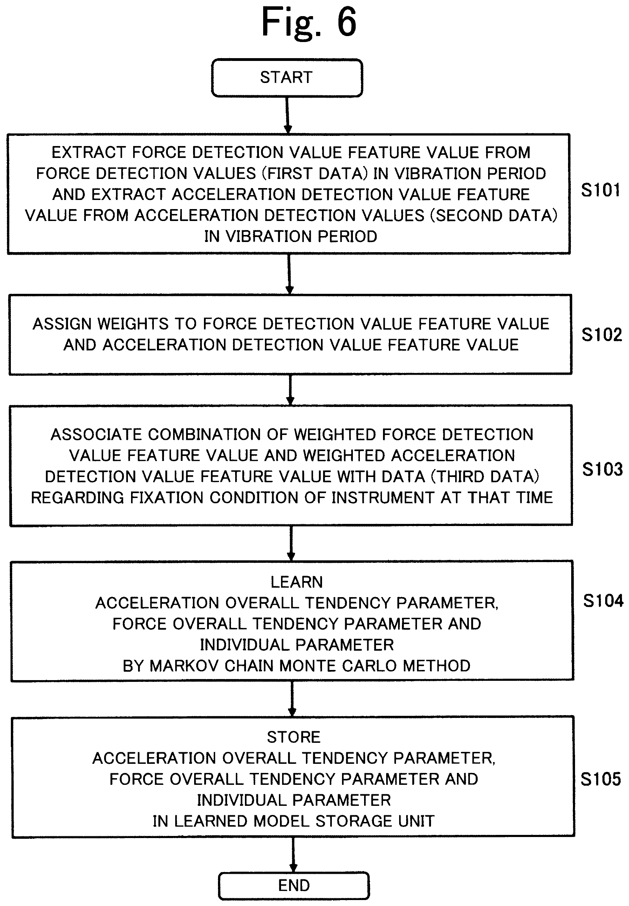

Fig. 6 is a flowchart showing the operation of the learning device 10a in Fig. 4. As shown in Fig. 6, in step S101, the feature value extraction unit 17 extracts the force detection value feature value from the force detection values D1a as the first data in the vibration period and extracts the acceleration detection value feature value from the acceleration detection values D2a as the second data in the vibration period.

In step S102, the user adaptation processing unit 18 assigns weights to the force detection value feature value and the acceleration detection value feature value based on the user information U.

In step S103, the user adaptation processing unit 18 associates the combination of the weighted force detection value feature value and the weighted acceleration detection value feature value with the condition information (third data) D3a (i.e., the correct answer) regarding the fixation condition of the instrument at that time.

In step S104, the model generation unit 14 generates the learned model by learning the acceleration overall tendency parameter $\beta_a$, the force overall tendency parameter $\beta_p$ and the individual parameter $\beta_{sbj}$ by the Markov chain Monte Carlo method.

In step S105, the recording unit 19 stores the acceleration overall tendency parameter $\beta_a$, the force overall tendency parameter $\beta_p$ and the individual parameter $\beta_{sbj}$ in the learned model storage unit 15. The recording unit 19 can record the index value as the result of estimating the condition of the target object (e.g., numerical value representing a loose fit level) while linking (associating) it with the time of day of the vibrating action period, the name of the instrument as the target object, and so forth.

By using the learned model generated by use of the learning device 10a, the learning method and the learning program according to the modification of the first embodiment, the worker's subjectivity does not influence the judgment, and thus the condition of the target object can be judged with high accuracy.

Further, by additionally using the force information in addition to the acceleration information, when the vibrating force is regarded as the input, the instrument can be regarded as a transmission system and the fixation condition can be regarded as its output, and thus the condition of the instrument can be estimated with higher accuracy.

Furthermore, by parametrically considering the variation from user to user, the fixation condition of the instrument can be estimated by use of an index being robust to the variation and unified.

Moreover, when acquiring the learning data of a new user as a newly joined worker, the learned model for estimating the fixation condition by the new user can be constructed by using data of other users without the need of acquiring observation data after setting all instruments in a loosened condition, and thus the load for the data collection can be reduced.

(3) Second Embodiment

Fig. 7 is a functional block diagram schematically showing the configuration of an inspection device 20 according to a second embodiment. The inspection device 20 is an inference device for inspecting the condition of the instrument 30b as the target object of the inspection by using the learned model generated by the learning device 10 or 10a and previously stored in a learned model storage unit 24 as a storage device. The inspection device 20 is a device capable of executing an inspection method according to the second embodiment. The inspection device 20 is, for example, a computer capable of executing an inspection program according to the second embodiment.

As shown in Fig. 7, the inspection device 20 includes a force acquisition unit 21, an acceleration acquisition unit 22 and a judgment unit 23 (i.e., inference unit). The force acquisition unit 21 acquires force detection values D1b as first inputs indicating the force for holding the instrument 30b as the target object detected by a force sensor 51b attached to a finger of a hand 40b of a user. The acceleration acquisition unit 22 acquires acceleration detection values D2b as second inputs indicating the acceleration detected by an acceleration sensor 52b attached to the hand 40b of the user. The judgment unit 23 is an inference unit that judges (i.e., infers) the condition of the instrument 30b from the force detection values D1b and the acceleration detection values D2b acquired in a vibration period, as the period of the vibrating action of vibrating the instrument 30b performed by the user, by using the learned model for judging the condition of the instrument 30b from the force detection values D1b and the acceleration detection values D2b acquired in the vibration period. The condition of the instrument 30b is, for example, the fixation condition of the instrument 30b to the support member 31b.

The force sensor 51b is arranged, for example, on a finger pad of the hand 40b to be situated between the finger and the instrument 30b. The force sensor 51b may also be attached to a finger of the hand 40b other than the thumb. The force sensor 51b can be a pressure sensor. It is also possible to provide a plurality of force sensors as the force sensor 51b. For example, as the force sensor 51b, two force sensors may be provided on two fingers holding the instrument 30a. The force sensor 51b is attached to a finger of the hand 40b of the user as the worker, and outputs the force detection values D1b as the first inputs (sensor values) indicating the force for holding the instrument 30b.

The acceleration sensor 52b is attached to the same hand to which the force sensor 51b is attached. The acceleration sensor 52b may also be attached to a finger of the hand 40b other than the index finger. Further, the acceleration sensor 52b may also be attached to a position on the hand 40b other than a finger (e.g., the palm or the back of the hand). A uniaxial, biaxial or triaxial acceleration sensor can be used as the acceleration sensor 52b. The hand 40b for performing the vibrating action may be provided with a plurality of acceleration sensors as the acceleration sensor 52b.

The acceleration sensor 52b is attached to the same hand 40b to which the force sensor 51b is attached, and outputs the acceleration detection values D2b as the second inputs (sensor values) indicating the acceleration. Each of the force sensor 51b and the acceleration sensor 52b may be configured to be stuck to a fingertip or a hand, or to be fixed to a fingertip or a hand by using a member to be wound around a finger. Further, the hand 40b may be provided with a plurality of acceleration sensors, a plurality of force sensors, or a plurality of acceleration sensors and a plurality of force sensors. Furthermore, the plurality of acceleration sensors or the plurality of force sensors are desired to satisfy the number of sensors, the sizes, and the attachment positions that do not impair the attachability to the hand 40b or the workability with the hand 40b.

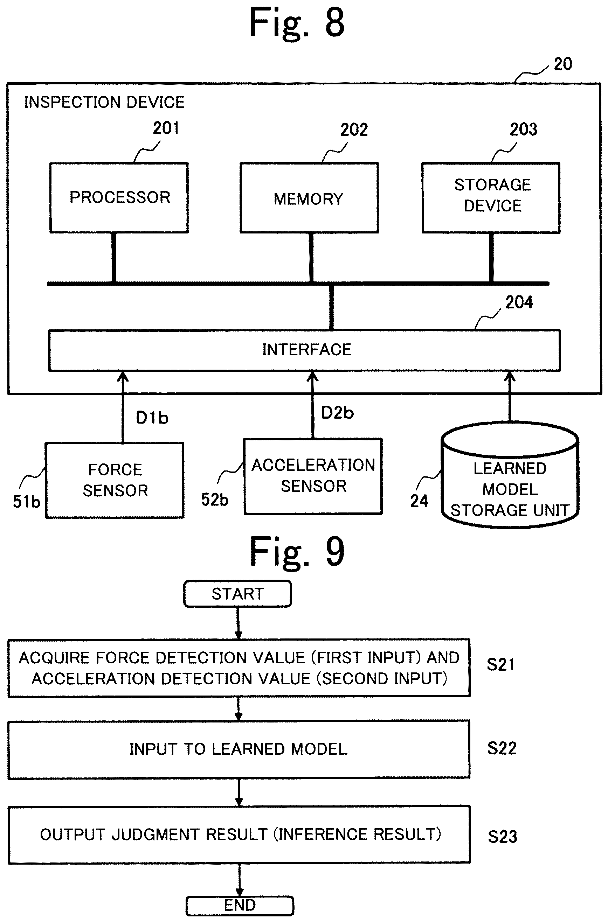

Fig. 8 is a diagram schematically showing an example of the hardware configuration of the inspection device 20 in Fig. 7. As shown in Fig. 8, the inspection device 20 includes a processor 201 such as a CPU, a memory 202 as a volatile storage device, a nonvolatile storage device 203 such as an HDD or an SSD, and an interface 204. The memory 202 is, for example, a semiconductor memory such as a RAM.

Functions of the inspection device 20 are implemented by a processing circuit, for example. The processing circuit can be either dedicated hardware or the processor 201 executing a program stored in the memory 202.

In the case where the processing circuit is dedicated hardware, the processing circuit is, for example, a single circuit, a combined circuit, a programmed processor, a parallelly programmed processor, an ASIC, an FPGA or a combination of some of these circuits.

In the case where the processing circuit is the processor 201, the inspection program to be executed is implemented by software, firmware, or a combination of software and firmware. The inspection program is installed in the inspection device 20 via a network or from a record medium. The software and the firmware are described as programs and stored in the memory 202. The processor 201 is capable of implementing the functions of the units shown in Fig. 7 by reading out and executing the learning program stored in the memory 202.

Incidentally, it is also possible to implement part of the inspection device 20 by dedicated hardware and other part of the inspection device 20 by software or firmware. As above, the processing circuit is capable of implementing the above-described functions by hardware, software, firmware or a combination of some of these means.

Fig. 9 is a flowchart showing the operation of the inspection device 20 in Fig. 7. As shown in Fig. 9, in an inference phase, in step S21, the force acquisition unit 21 acquires the force detection values D1b as the first inputs and the acceleration acquisition unit 22 acquires the acceleration detection values D2b as the second inputs.

In steps S21 and S23, the judgment unit 23 inputs the force detection values D1b and the acceleration detection values D2 to the learning data to be used and thereby outputs the judgment result (i.e., inference result).

By using the inspection device 20, the inspection method and the inspection program according to the second embodiment, the worker's subjectivity does not influence the judgment, and thus the condition of the target object can be judged with high accuracy.

(4) Modification of Second Embodiment

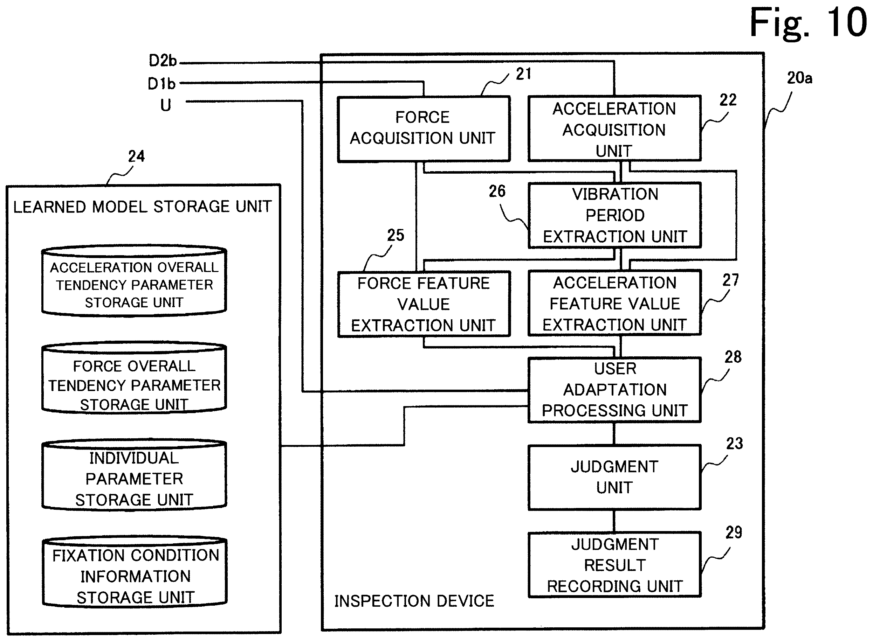

Fig. 10 is a functional block diagram schematically showing the configuration of an inspection device 20a according to a modification of the second embodiment. The inspection device 20a is an inference device for inspecting the condition of the instrument 30b as the target object of the inspection by using the learned model generated by the learning device 10 or 10a and previously stored in the learned model storage unit 24 as a storage device. The inspection device 20a is a device capable of executing an inspection method according to the modification of the second embodiment, such as a computer, for example.

Similarly to the inspection device 20 in Fig. 7, the inspection device 20a includes the force acquisition unit 21, the acceleration acquisition unit 22, and the judgment unit 23 as the inference unit. Further, the inspection device 20a includes a force feature value extraction unit 25, a vibration period extraction unit 26, an acceleration feature value extraction unit 27, a user adaptation processing unit 28 and a judgment result recording unit 29.

The vibration period extraction unit 26 extracts the vibration period as the period of the vibrating action based on at least either of the force detection values D1b as the first inputs and the acceleration detection values D2b as the second inputs. As the vibration period extraction method, the method described in the modification of the first embodiment can be used.

The force feature value extraction unit 25 extracts the force detection value feature value as the first feature value from the force detection values D1b as the first inputs. The force detection value feature value is, for example, a variance value, a peak-to-peak value, a mean value or the like. The acceleration feature value extraction unit 27 extracts the acceleration detection value feature value as the second feature value from the acceleration detection values D2b as the second inputs. The acceleration detection value feature value is, for example, a variance value, a peak-to-peak value, a mean value or the like.

The user adaptation processing unit 28 assigns weights to the feature values based on the force detection value feature value as the first feature value, the force detection value feature value as the second feature value, and the user information U. The weighted feature value x is calculated according to the aforementioned expression (1), for example. The user adaptation processing unit 28 selects a learned model to be used from the learned model storage unit 24 based on the user information U. Specifically, the user adaptation processing unit 18 reads in the acceleration overall tendency parameter, the force overall tendency parameter and the individual parameter from the learned model storage unit 15 and thereby executes the process of assigning weights to the inputted feature values. The attribute of the user includes the user's years of experience regarding the inspection work (i.e., information indicating the number of times the user has experienced the work) or the like. Further, the attribute of the user includes the physical information regarding the user. The physical information includes, for example, one or more items of information out of body height, body weight, muscle mass, sex, age, hand shape (palm size, finger lengths), previously measured grip strength, muscle endurance and instantaneous force, etc. of the user. In this example, by selecting a corresponding learned model from the learned models grouped based on the attribute of the user, variations can be reduced in the learning data to be used for constructing the learned model and in the inference target data to be used for the inference, and thus the condition of the instrument can be estimated with high accuracy. The hand may be provided with a plurality of acceleration sensors, a plurality of force sensors, or a plurality of acceleration sensors and a plurality of force sensors. In this case, the condition of the hand (e.g., joint positions, joint angles) may be estimated from observation information from those sensors, and that information may be used as new attribute information regarding the user, as a new input, and for the selection of the learned model.

The judgment unit 23 receives the weighted force detection value feature value and the weighted acceleration detection value feature value as inputs, calculates a score g of the condition of the instrument 30b, and judges the fixation condition of the instrument 30b based on the score g. In the score calculation, an index value is estimated through a nonlinear function f by using the result of the processing by the user adaptation processing unit 28 using the learned parameters. In the case where the grouping has been carried out, the index value is estimated by selecting a corresponding learned model. The score calculation is performed by using the following expression (2) employing the hierarchical Bayesian model and regression analysis, for example:

$$g \sim f\left(x = \beta_a \cdot Acc + \beta_p \cdot Prs + \beta_{sbj}, \sigma_{sbj}\right) \qquad (2)$$

In the expression (2), g represents the index value (e.g., screw rotation amount) indicating the fixation condition, x represents the weighted feature value, $\beta_a$ is a parameter representing the acceleration overall tendency, Acc represents the acceleration detection value feature value, $\beta_p$ is a parameter representing the force overall tendency, Prs represents the force detection value feature value, $\beta_{sdj}$ is a parameter representing the individual difference that is set for each user as a worker performing the inspection, and $\sigma_{sbj}$ is a parameter representing variation that the stochastic model has.

The judgment result recording unit 29 outputs the judgment result (i.e., inference result) or records the judgment result in a storage device. The judgment result recording unit 29 can record the index value as the result of estimating the condition of the instrument 30b as the target object (e.g., numerical value representing the loose fit level) while linking (associating) it with the time of day of the vibrating action period, the name of the instrument as the target object, and so forth.

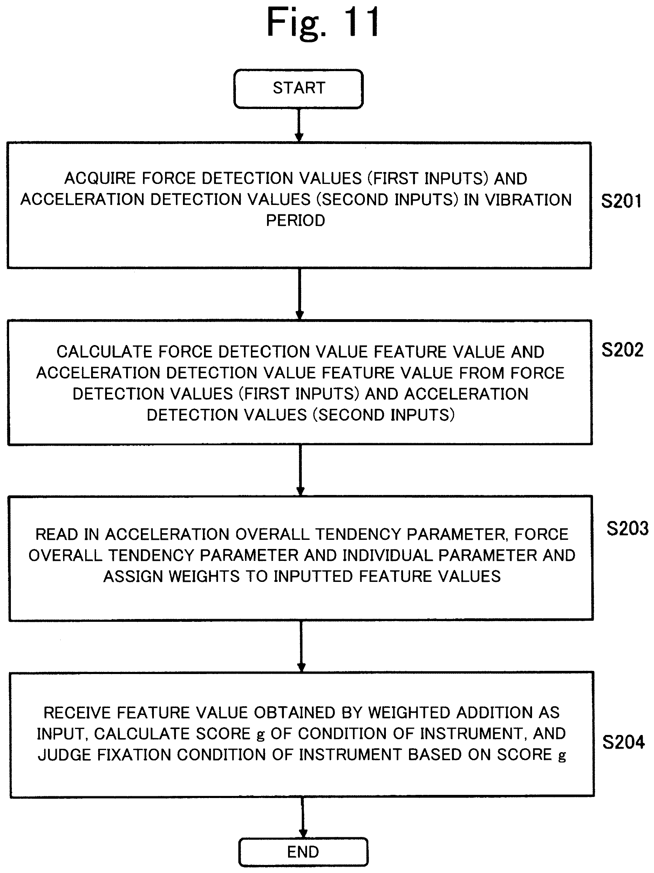

Fig. 11 is a flowchart showing the operation of the inspection device 20a in Fig. 10. As shown in Fig. 11, in step S201, the force acquisition unit 21 acquires the force detection values D1b as the first inputs in the vibration period and the acceleration acquisition unit 22 acquires the acceleration detection values D2b as the second inputs.

In step S202, the force feature value extraction unit 25 calculates the force detection value feature value from the force detection values D1b as the first inputs in the vibration period and the acceleration feature value extraction unit 27 calculates the acceleration detection value feature value from the acceleration detection values (second inputs) as the second inputs in the vibration period.

In step S203, the user adaptation processing unit 18 reads in the acceleration overall tendency parameter, the force overall tendency parameter and the individual parameter from the learned model storage unit 15 and thereby executes the process of assigning weights to the inputted feature values.

In step S204, the judgment unit 23 receives the weighted feature value x as the input, calculates the score g of the condition of the instrument, and judges the fixation condition of the instrument based on the score g. The score calculation is performed by using the aforementioned expression (2) employing the hierarchical Bayesian model and the regression analysis, for example.

By using the inspection device 20a, the inspection method and the inspection program according to the modification of the second embodiment, the worker's subjectivity does not influence the judgment, and thus the condition of the target object can be judged with high accuracy.

DESCRIPTION OF REFERENCE CHARACTERS

10, 10a: learning device, 11: learning data generation device, 12: learning data storage unit, 13: data acquisition unit, 14: model generation unit, 15: learned model storage unit, 16: vibration period extraction unit, 17: feature value extraction unit, 18: user adaptation processing unit, 19: recording unit, D1a: force detection value (first data), D2a: acceleration detection value (second data), D3a: condition information (third data), U: user information, 20, 20a: inspection device, 21: force acquisition unit, 22: acceleration acquisition unit, 23: judgment unit, 24: learned model storage unit, 25: force feature value extraction unit, 26: vibration period extraction unit, 27: acceleration feature value extraction unit, 28: user adaptation processing unit, 29: judgment result recording unit, 30a, 30b: instrument (target object), 31a, 31b: support member, 40a, 40b: hand, 51a, 51b: force sensor, 52a, 52b: acceleration sensor, D1b: force detection value (first input), D2b: acceleration detection value (second input)

**Claims**

1.   An inspection device that inspects condition of a target object, comprising:

   a force acquisition unit that acquires a first input indicating force for holding the target object detected by a force sensor attached to a finger of a hand of a user;
   an acceleration acquisition unit that acquires a second input indicating acceleration detected by an acceleration sensor attached to the hand; and
   a judgment unit that judges the condition of the target object from the first input and the second input acquired in a period of a vibrating action of vibrating the target object performed by the user, by using a learned model for judging the condition of the target object, the learned model being generated by using user information regarding the user from the first input and the second input acquired in the period.

2.   The inspection device according to claim 1, wherein

   the condition of the target object is fixation condition of the target object to a support member, and
   the judgment unit judges whether the fixation condition of the target object is good or not.

3.   The inspection device according to claim 1 or 2, further comprising a vibration period extraction unit that extracts the period of the vibrating action based on at least either of the first input and the second input.

4.   The inspection device according to any one of claims 1 to 3, further comprising a user adaptation processing unit that selects the learned model to be used by the judgment unit from a plurality of previously stored learned models according to the user information including at least either of identification information regarding the user and an attribute of the user.

5.   The inspection device according to claim 4, wherein the attribute of the user includes the user's years of experience regarding inspection work.

6.   The inspection device according to claim 4 or 5, wherein the attribute of the user includes physical information regarding the user.

7.   The inspection device according to any one of claims 4 to 6, further comprising:

   a force feature value extraction unit that extracts a first feature value from the first input; and
   an acceleration feature value extraction unit that extracts a second feature value from the second input,
   wherein the user adaptation processing unit selects the learned model based on the first feature value, the second feature value and the user information.

8.   An inspection method to be executed by an inspection device that inspects condition of a target object, comprising:

   a step of acquiring a first input indicating force for holding the target object detected by a force sensor attached to a finger of a hand of a user;
   a step of acquiring a second input indicating acceleration detected by an acceleration sensor attached to the hand; and

a step of judging the condition of the target object from the first input and the second input acquired in a period of a vibrating action of vibrating the target object performed by the user, by using a learned model for judging the condition of the target object, the learned model being generated by using user information regarding the user from the first input and the second input acquired in the period.

9. An inspection program that causes a computer to execute the inspection method according to claim 8.

10. A learning device that generates a learned model for judging condition of a target object, comprising:

a data acquisition unit that acquires learning data including first data indicating force for holding the target object detected by a force sensor attached to a finger of a hand of a user, second data indicating acceleration detected by an acceleration sensor attached to the hand, third data indicating the condition of the target object corresponding to a combination of the first data and the second data in a period of a vibrating action of vibrating the target object performed by the user, and user information regarding the user; and
a model generation unit that generates the learned model for judging the condition of the target object by using the learning data.

11. The learning device according to claim 10, wherein

the condition of the target object is fixation condition of the target object to a support member, and
the model generation unit generates the learned model for judging whether the fixation condition of the target object is good or not.

12. The learning device according to claim 10 or 11, further comprising a vibration period extraction unit that extracts the period of the vibrating action based on at least either of the first data and the second data.

13. The learning device according to any one of claims 10 to 12, wherein the model generation unit generates a plurality of the learned models corresponding to the user information including at least either of identification information regarding the user and an attribute of the user and stores the generated learned models in a storage unit.

14. The learning device according to claim 13, wherein the attribute of the user includes the user's years of experience regarding inspection work.

15. The learning device according to claim 13 or 14, wherein the attribute of the user includes physical information regarding the user.

16. The learning device according to any one of claims 13 to 15, wherein the attribute of the user includes physical ability information regarding the user.

17. A learning method to be executed by a learning device that generates a learned model for judging condition of a target object, comprising:

a step of acquiring learning data including first data indicating force for holding the target object detected by a force sensor attached to a finger of a hand of a user, second data indicating acceleration detected by an acceleration sensor attached to the hand, third data indicating the condition of the target object corresponding to a combination of the first data and the second data in a period of a vibrating action of vibrating the target object performed by the user, and user information regarding the user; and
a step of generating the learned model for judging the condition of the target object by using the learning data.

18. A learning program that causes a computer to execute the learning method according to claim 17.

# Fig. 1

LEARNING DATA GENERATION DEVICE — 11

LEARNING DATA STORAGE UNIT — 12

D1a, D2a, D3a

LEARNING DEVICE — 10

DATA ACQUISITION UNIT — 13

MODEL GENERATION UNIT — 14

LEARNED MODEL STORAGE UNIT — 15

52a

51a

30a

31a

40a

EP 4 650 745 A1

# Fig. 2

10

LEARNING DEVICE

101
PROCESSOR

102
MEMORY

103
STORAGE DEVICE

104
INTERFACE

D1a, D2a, D3a, U

12 LEARNING DATA STORAGE UNIT

15 LEARNED MODEL STORAGE UNIT

# Fig. 3

START

↓

ACQUIRE LEARNING DATA    S11

↓

LEARNING PROCESS    S12

↓

STORE LEARNED MODEL    S13

↓

END

Fig. 4

EP 4 650 745 A1

LEARNING DATA STORAGE UNIT — 12

D1a, D2a, D3a

U

LEARNED MODEL STORAGE UNIT — 15

ACCELERATION OVERALL TENDENCY PARAMETER STORAGE UNIT

FORCE OVERALL TENDENCY PARAMETER STORAGE UNIT

INDIVIDUAL PARAMETER STORAGE UNIT

FIXATION CONDITION INFORMATION STORAGE UNIT

LEARNING DEVICE

DATA ACQUISITION UNIT — 13

VIBRATION PERIOD EXTRACTION UNIT — 16

FEATURE VALUE EXTRACTION UNIT — 17

USER ADAPTATION PROCESSING UNIT — 18

MODEL GENERATION UNIT — 14

RECORDING UNIT — 19

10a

# Fig. 5B

WORKER #1

FIXATION CONDITION OF INSTRUMENT
(LAXITY LEVEL OF INSTRUMENT FASTENING PART)

FEATURE VALUE EXTRACTED FROM SENSOR VALUES
(VARIANCE OF ACCELERATION + MAXIMUM VALUE OF PRESSURE)

# Fig. 5C

WORKER #2

FIXATION CONDITION OF INSTRUMENT
(LAXITY LEVEL OF INSTRUMENT FASTENING PART)

FEATURE VALUE EXTRACTED FROM SENSOR VALUES
(VARIANCE OF ACCELERATION + MAXIMUM VALUE OF PRESSURE)

# Fig. 5A

OVERALL TENDENCY

FIXATION CONDITION OF INSTRUMENT
(LAXITY LEVEL OF INSTRUMENT FASTENING PART)

FEATURE VALUE EXTRACTED FROM SENSOR VALUES
(VARIANCE OF ACCELERATION + MAXIMUM VALUE OF PRESSURE)

# Fig. 6

```
START
```

↓

EXTRACT FORCE DETECTION VALUE FEATURE VALUE FROM
FORCE DETECTION VALUES (FIRST DATA) IN VIBRATION PERIOD
AND EXTRACT ACCELERATION DETECTION VALUE FEATURE
VALUE FROM ACCELERATION DETECTION VALUES (SECOND DATA)
IN VIBRATION PERIOD          S101

↓

ASSIGN WEIGHTS TO FORCE DETECTION VALUE FEATURE VALUE
AND ACCELERATION DETECTION VALUE FEATURE VALUE          S102

↓

ASSOCIATE COMBINATION OF WEIGHTED FORCE DETECTION
VALUE FEATURE VALUE AND WEIGHTED ACCELERATION
DETECTION VALUE FEATURE VALUE WITH DATA (THIRD DATA)
REGARDING FIXATION CONDITION OF INSTRUMENT AT THAT TIME          S103

↓

LEARN
ACCELERATION OVERALL TENDENCY PARAMETER,
FORCE OVERALL TENDENCY PARAMETER AND
INDIVIDUAL PARAMETER
BY MARKOV CHAIN MONTE CARLO METHOD          S104

↓

STORE
ACCELERATION OVERALL TENDENCY PARAMETER,
FORCE OVERALL TENDENCY PARAMETER AND
INDIVIDUAL PARAMETER
IN LEARNED MODEL STORAGE UNIT          S105

↓

```
END
```

# Fig. 7

INSPECTION DEVICE

ACCELERATION ACQUISITION UNIT — 22

FORCE ACQUISITION UNIT — 21

JUDGMENT UNIT — 23

LEARNED MODEL STORAGE UNIT — 24

20

D2b

D1b

40b

51b

52b

30b

31b

# Fig. 8

20

INSPECTION DEVICE

201
PROCESSOR

202
MEMORY

203
STORAGE DEVICE

204
INTERFACE

D1b

D2b

51b
FORCE SENSOR

52b
ACCELERATION SENSOR

24
LEARNED MODEL STORAGE UNIT

# Fig. 9

START

ACQUIRE FORCE DETECTION VALUE (FIRST INPUT) AND ACCELERATION DETECTION VALUE (SECOND INPUT)   S21

INPUT TO LEARNED MODEL   S22

OUTPUT JUDGMENT RESULT (INFERENCE RESULT)   S23

END

# Fig. 10

EP 4 650 745 A1

# Fig. 11

```
┌─────────────┐
│    START    │
└─────────────┘
       │
       ▼
┌──────────────────────────────────────────────────┐
│  ACQUIRE FORCE DETECTION VALUES (FIRST INPUTS) AND │   S201
│  ACCELERATION DETECTION VALUES (SECOND INPUTS) IN  │
│              VIBRATION PERIOD                      │
└──────────────────────────────────────────────────┘
       │
       ▼
┌──────────────────────────────────────────────────┐
│    CALCULATE FORCE DETECTION VALUE FEATURE VALUE   │   S202
│    AND ACCELERATION DETECTION VALUE FEATURE VALUE  │
│    FROM FORCE DETECTION VALUES (FIRST INPUTS) AND  │
│    ACCELERATION DETECTION VALUES (SECOND INPUTS)   │
└──────────────────────────────────────────────────┘
       │
       ▼
┌──────────────────────────────────────────────────┐
│   READ IN ACCELERATION OVERALL TENDENCY PARAMETER, │   S203
│   FORCE OVERALL TENDENCY PARAMETER AND INDIVIDUAL  │
│   PARAMETER AND ASSIGN WEIGHTS TO INPUTTED FEATURE │
│                    VALUES                          │
└──────────────────────────────────────────────────┘
       │
       ▼
┌──────────────────────────────────────────────────┐
│  RECEIVE FEATURE VALUE OBTAINED BY WEIGHTED        │
│  ADDITION AS INPUT, CALCULATE SCORE g OF CONDITION │   S204
│  OF INSTRUMENT, AND JUDGE FIXATION CONDITION OF    │
│  INSTRUMENT BASED ON SCORE g                       │
└──────────────────────────────────────────────────┘
       │
       ▼
┌─────────────┐
│     END     │
└─────────────┘
```

## INTERNATIONAL SEARCH REPORT

| International application No. |
|---|
| **PCT/JP2023/006521** |

**A.    CLASSIFICATION OF SUBJECT MATTER**

*G01M 99/00*(2011.01)i
FI:    G01M99/00 Z

According to International Patent Classification (IPC) or to both national classification and IPC

**B.    FIELDS SEARCHED**

Minimum documentation searched (classification system followed by classification symbols)

G01M99/00, G01M13/00-13/045

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| A | JP 2008-226506 A (KANTO AUTO WORKS, LTD.) 25 September 2008 (2008-09-25) paragraphs [0008]-[0014], fig. 1 | 1-18 |
| A | JP 2022-112143 A (TOYOTA JIDOSHA KABUSHIKI KAISHA) 02 August 2022 (2022-08-02) paragraph [0018] | 1-18 |
| A | JP 2022-175940 A (PANASONIC INTELLECTUAL PROPERTY MANAGEMENT CO., LTD.) 25 November 2022 (2022-11-25) claims, fig. 2 | 1-18 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **11 April 2023** | **09 May 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2023/006521**

| Patent document cited in search report | | | Publication date (day/month/year) | Patent family member(s) | Publication date (day/month/year) |
|---|---|---|---|---|---|
| JP | 2008-226506 | A | 25 September 2008 | (Family: none) | |
| JP | 2022-112143 | A | 02 August 2022 | (Family: none) | |
| JP | 2022-175940 | A | 25 November 2022 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008245917 A